# EUROPEAN PATENT APPLICATION

(11) **EP 1 112 967 A1**
(43) Date of publication of application: **04.07.2001**
(21) Application number: 98931111.3
(22) Date of filing: 26.06.1998
(51) Int. Cl.: C02F 1/48, B03C 1/02

(54) **GENERATOR OF MAGNETIC FIELDS INCREMENTED BY THE PASSAGE OF FLUIDS**

(71) Applicant: Bonilla Leanos, Eliseo Alfredo, Aguascalientes, Aguascalientes 20270 (MX)
(72) Inventor: Bonilla Leanos, Eliseo Alfredo, Aguascalientes, Aguascalientes 20270 (MX)
(74) Representative: W.P. THOMPSON & CO.
(86) International application number: MX9800026
(87) International publication number: WO0000435

(57) **Abstract**

The invention provides a generator of magnetic fields, which lines of force are so arrayed to obtain their greater interaction with liquid or gaseous fluids circulating in a tubular medium which contains it, said fluid acting on the starting or subsequent magnetic fields cutting the lines of force and generating a spike or pulse which is amplified by solid state media in one or more steps and carried to the winding of an induction element to generate in this winding a new magnetic field notably increased and with more specific effects on the fluid, affecting its kinetics with the purpose of obtaining changes in its physical, chemical or biological characteristics.

## Description

The effects of a magnetic field applied to masses of liquids or gases either in motion or static with the purpose of obtaining certain changes in the physical or chemical properties of these masses, are well known. The most common use of these devices has been the precipitation of salts and the decrease of scaling in pipelines and liquid containers with certain contents of said salts. Known devices do not have specific application to the particular contents of the fluid mass and said devices do not have the intensity required to assure their efficiency.

The invention consists of a new device that allows the application of magnetic fields to liquid or gaseous fluids, contained within tubular media, said fluids interacting with the lines of force of the magnetic fields, cutting them in such a way that the collapse of the fields generates spikes, which induced in the induction coils of the device, provide an energy feedback, considerably increasing the intensity of the magnetic fields in operation, the device having sensor media and control of said energy feedback and of the frequency of oscillation of the magnetic fields, which will have an specific frequency as well as an intensity suitable to its applications.

For a better understanding of the description of the device, detailed reference is made to the generator of an increased magnetic field, which comprises a sweep oscillator, a permanent magnet medium for the provision of an initial magnetic field and for the deflection of the lines of force of these field; solid state media which utilize the spike resulting from the collapse of the initial magnetic field, caused by the passage of liquid in a transverse relation to the initial lines of force, to generate a magnetic field increased by the amplification of the current resulting from the induction of the spikes, said new lines of force also to be cut by the fluid in circulation, in turn causing the collapse of this new magnetic field, providing the corresponding spike which applied to the solid state media and induction coil, provide in turn a positive feedback. In this manner and by this functional combination, magnetic fields are obtained with lines of force having the required intensity and frequency for their application to the liquid in circulation, altering it.

Thus, one of the objects of the invention is to provide a device which comprises the media for substantially increasing the energy of the primary magnetic field, using the spike produced by the collapse of this initial magnetic field, said impulse used by the induction media and the solid state amplifiers in order to provide by positive feedback, an increased magnetic field which in turn will be collapsed by the passage of fluid, to repeat the feedback until it is stabilized by the control media and by the natural effect of saturation.

Another object of the invention is to provide a similar device, in which a feedback energy is provided with a base frequency obtained from sweep generation media, acting in combination with the control media of such feedback, that in the invention are provided by induction components in the manner of sensors of the conductivity of the contents and the size of the particles in the fluid, which signal will result in a change and stability of the primary magnetic field frequency oscillation.

These media, in their functional combination will result in the penetration of a magnetic field, into a fluid in motion, said magnetic field which has been increased by amplification and feedback at a stabilized frequency, as determined by the content characteristics of the fluid, which penetration is sufficient to alter the physical, chemical or biological characteristics of the fluid.

The same numbers designate the same parts in the different figures of the drawings, in which:
Figure 1, illustrates in conventional perspective a modality of the units of generators of magnetic fields increased by the passage of fluids, arrayed in a relative position as affixed to the tubular medium that conveys the fluid.
Figure 2, unit 1, schematically illustrates the relative array of the primary magnetic modules, the spike induction components and the oscillation circuit, in the emission unit.
Figure 3, unit 2, schematically illustrates the relative array of the primary modules, the spike induction component which is also the medium to sense the contents of the liquid, which provides the control of the frequency of operation of the magnetic fields.
Figure 4, schematically illustrates a permanent magnetic field generation solid state module, comprising the amplification media for the induced current, showing the transversal position of the winding of the induction coil, in relation to the solid state components.
Figure 5, schematically illustrates the array of the lines of force which are found in the primary or initial magnetic field.
Figure 6, also schematically illustrates, the array of the lines of force of the increased primary magnetic field and the magnetic lines of the secondary and deflection magnetic field, produced by the interaction of the lines of force of the primary magnetic field, increased by the generation of the spike.

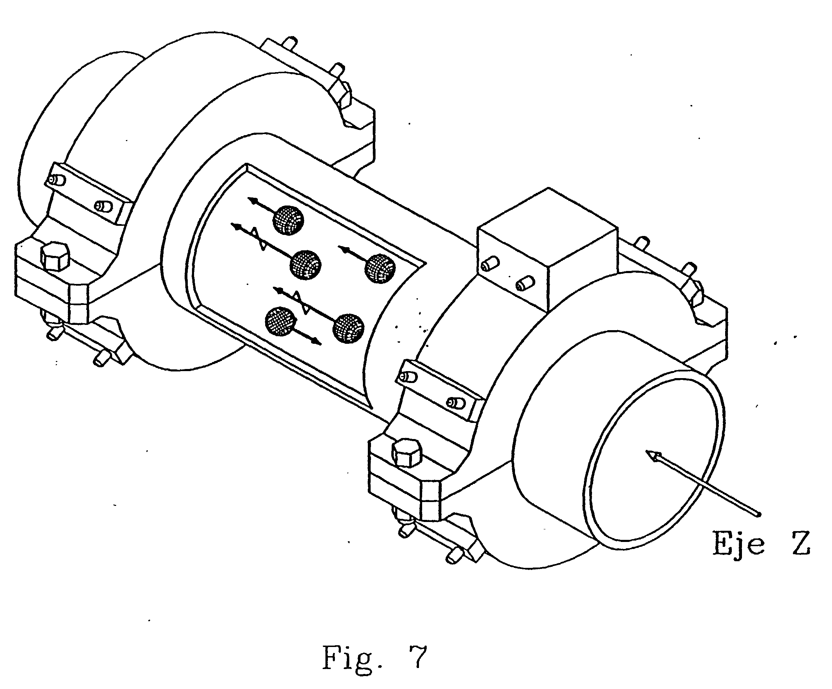

Figure 7, schematically illustrates the effect of the increased magnetic field, in the kinetics of the contents of the fluid.

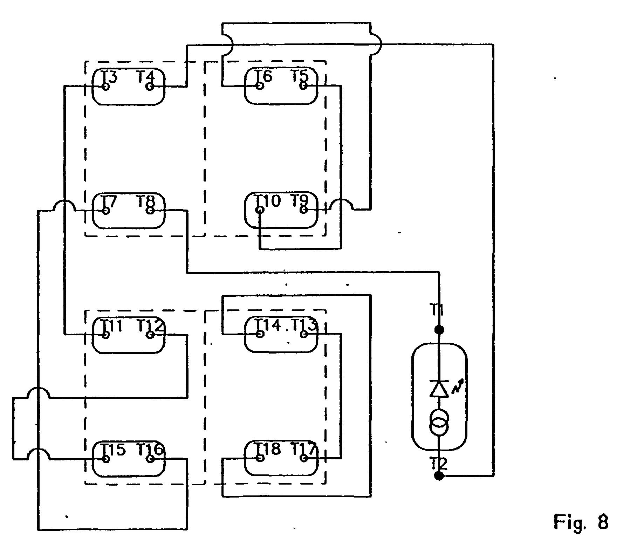

Figure 8, schematically illustrates the connections between the electrical terminals in units 1 and 2 of the device, and the connection of the units to the variable frequency oscillator.
Figure 9 and 10 illustrate the electric circuits for the components in the emitting unit and partially in the receptor unit, one of said modules which is shown in figure 10, is connected to its equivalent component illustrated in figure 9, by a zone of depletion shown with a double dotted line.

According to the preferred modality of the invention illustrated in the drawings, the generator of magnetic fields increased by the passage of fluids, comprises two units, 1 and 2, which generate permanent magnetic fields increased by the passage of fluids, which units, built substantially alike, consist each one of a divided cylindrical body 3 and 4, with perpendicular extensions 5 and 6, affixed to each other by bolts 7. On this cylindrical body, terminals 8 are provided, connecting the solid state and induction modules which will be referred to.

This cylindrical body equally supports a sweep or variable frequency oscillator 9, that is part of the primary magnetic field electric circuit.

On the central open space of these divided cylindrical bodies, a tubular medium 10 is provided, supporting the divided cylinders 3 and 4, said tubular medium 10 connected by its open ends 11 and 12, to the fluid circulation system, in such a way that the fluid flows through the magnetic axis of units 1 and 2.

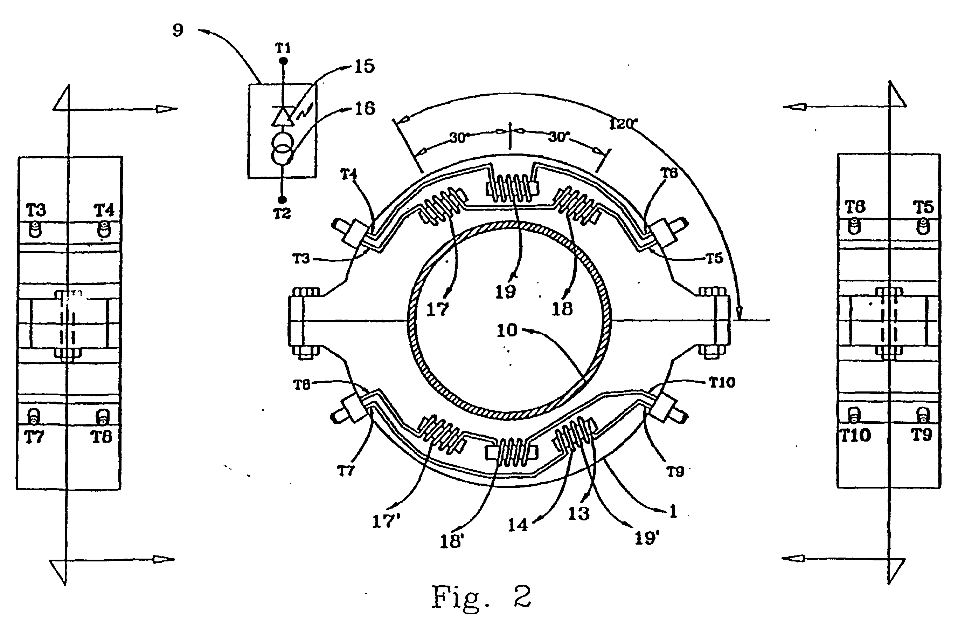

Inside the cylindrical units 1 and 2, there is enough space and support for the solid state modules used for the generation and deflection of the primary magnetic field. The solid state components are designated with number 13 in figure 2 and the transversal coils wound in said solid state components are designated with number 14.

The circuit for the electric connections of the oscillation components 9, induction coil 14, and solid state components 13, are illustrated in figure 2, this oscillator consisting of conventional frequency sweep media 9, which band will correspond to the various applications of the device which is the subject matter of the invention. It has been found that in this sweep oscillator a light emitting diode 15 may be used in combination with other components of the device, which is characterized for providing an electronic oscillation similar to that of a quartz crystal.

The device also includes in this oscillation circuit, the corresponding energy source, as schematically designated with number 16 and which may be a battery. In the operation of the device, this battery has a noncontinuous use, since it is characteristic to the invention that the passage of fluid through the tubular medium 10, generates a current that keeps the unit in operation, as long as the fluid circulates and cuts the magnetic lines, with the results described further on.

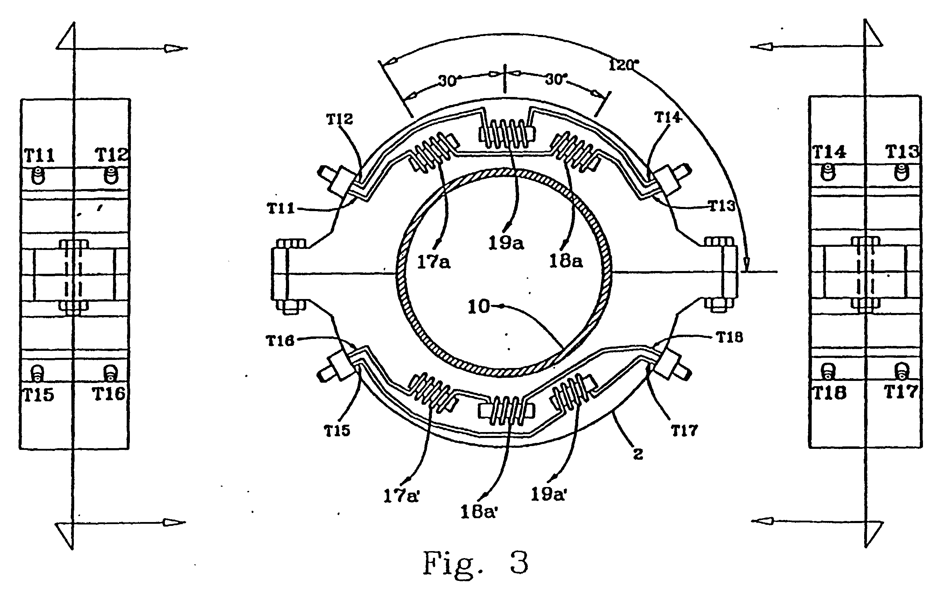

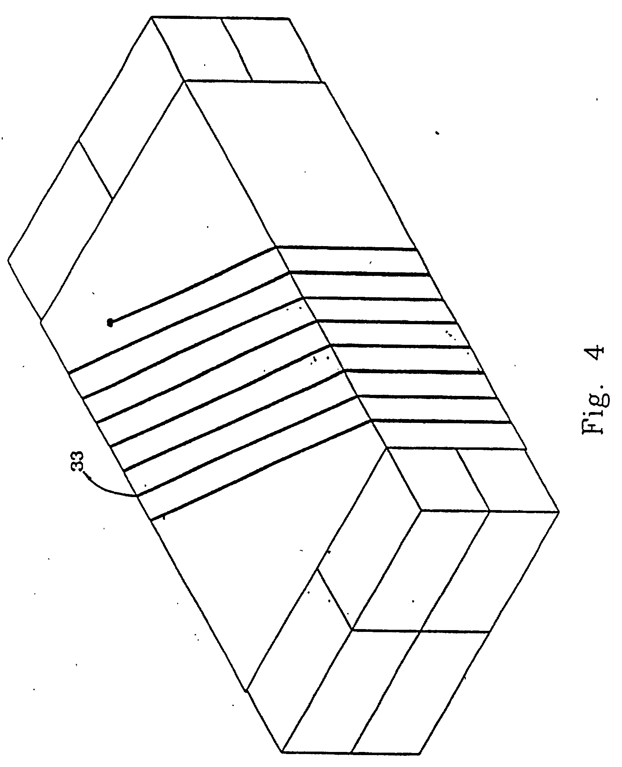

Modules 17 and 18 as schematically illustrated in figures 2 and 3, both include in combination, induction media 14, with winding disposed transversely to the longitudinal axis of the module; solid state media 13, that provide a permanent magnetic field and current amplification in the module. With such purpose, the solid state amplifiers, the permanent magnet media and the transversal induction winding form an electric circuit. This module is illustrated in figure 4.

Induction modules 17 and 18 are affixed to the upper part of cylinder 1, as shown in figure 2 at a relative position of 120 degrees in relation to the horizontal axis of the assembly and they are connected in series at terminals T3 and T5. In the lower part of this cylinder induction modules 17' and 18' are also connected in series, the first one with a relative position of 120 degrees and the adjacent module in a relative position of 90 degrees, said modules connected to terminals T8 and T10.

Modules 19, referred to as sensors, are arrayed at 90 degrees in relation to the unit's horizontal axis and they are connected to terminals T4 and T6 in the lower part of the cylinder module 19 is affixed in a relative position of 120 degrees and connected to terminals T7 and T9. These modules 19 and 19' receive the spike generated by the collapse of the magnetic field caused by the fluid circulating in tubular medium 10, cutting into the magnetic lines of force.

For the sensing unit designated as unit or cylinder 2 in figure 3, these modules 19a and those marked with numbers 17a and 18a provide permanent magnet media and solid state current amplifier media and in combination, a transverse winding, said winding affixed to the module in a 45 degrees position relative to the longitudinal axis of the module, which receives the induced current amplified by the solid state media, for the generation of the new magnetic field of increased intensity and senses the conductivity of the fluid passing through tube 10 using to the dephasement created in the liquid for the adjustment of the frequency of oscillation.

In unit 2, illustrated in figure 3, there is a construction similar and equivalent in its functions and operation to that already described, although units 1 and 2 differ since the first unit has the characteristic of being a magnetic energy emitter, that in the fluid's displacement within the tubular medium, is the first to interact with such fluid. Unit 2 senses the changes in the fluid in circulation which has been affected by the magnetic fields of unit 1.

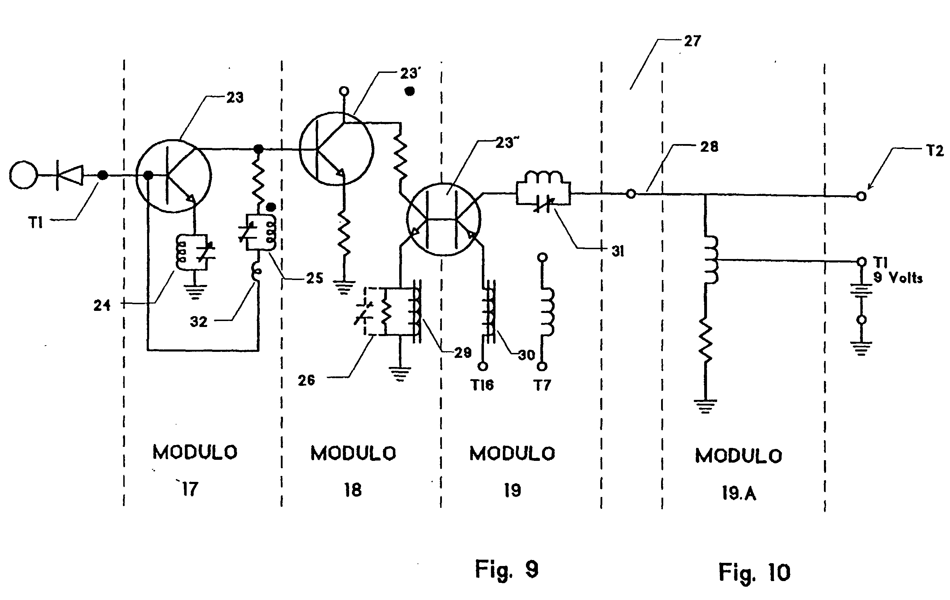

In unit 2, or receptor unit, modules 19 have the same relative array, but act as sensor media, since they receive a different magnetic feedback, different from than that of unit 1, since the physical and chemical characteristics of the fluid have been altered, and this difference, is sensed by the modules and by the illustrated electric circuit in figures 9 and 10, and is used as a control medium of the oscillation frequency and of the amplitude of the increased magnetic energy.

It should be clearly stated that in this unit 2 of figure 3, called receptor, it is found, as has been described, permanent or initial magnetic field generation components without the oscillation unit, since these modules are electrically connected to those in unit 1.

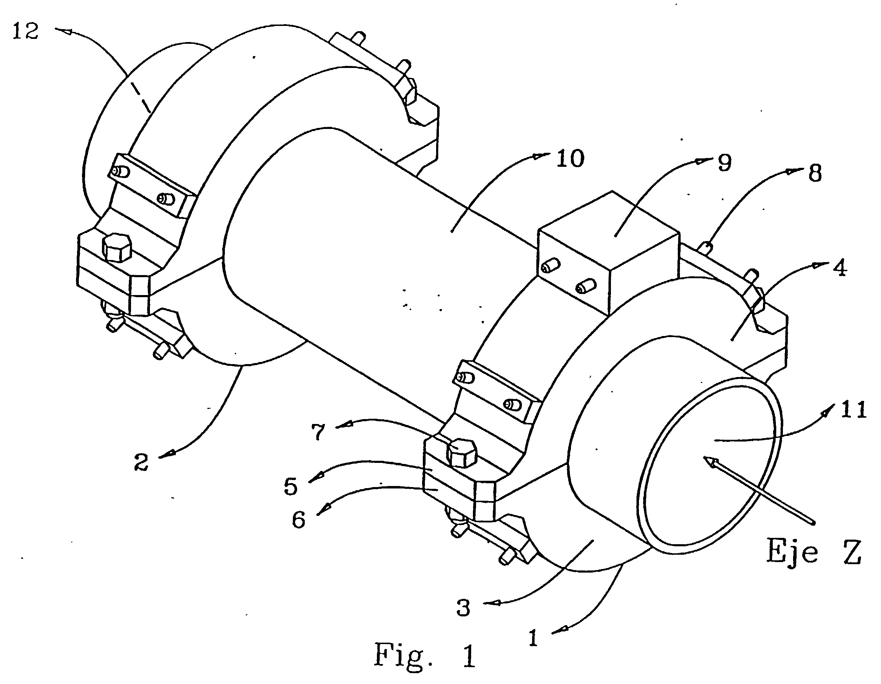

The modules in unit 1, referred to as the emitting unit comprising the variable frequency media, and unit 2, referred to as the receptor unit, are electrically connected by their terminals, as follows: T1 to T8; T2 to T4; T3 to T11; T5 to T10; T6 to T9; T7 to T16; T12 to T15; T13 to T18 yT14 to T17, as illustrated in figure 1. Modules in units 1 y 2, are connected T1 to T8 to module 17' to module 18' to T10; T5 to module 18 to module 17 to T3; T11 to module 17a to module 18a to T13; T17 to module 19a' to T15; T12 to module 19a to T14; T18 to module 18a' to module 17a' to T16; T7 to module 19' to T9; T6 to module 9 to T4 to T2.

The modules which are part of the invention, are formed with rare earth materials, molded to provide the permanent magnet and to act as semiconductors, which in combination with inductive and capacitive elements provide in the emitting unit, the media to obtain an oscillation and the generation of increased magnetic fields; the amplifying media for the the spike which in the receptor unit also act as sensors of the changes in the circulating fluid. Figures 9 and 10 of the drawings illustrate the equivalent electric circuits, providing in modules 17, located in the upper and lower portions of unit 1, the electrical equivalent of a semiconductor 23, oscillator and amplifier provided with tanks 24 and 25; in module 18, amplifying media of variable capacitance, with a virtual circuit 26 for oscillation, shown in dotted lines, which uses the induction and capacitance of the rare earth media, with a depletion zone 27 provided as intermodular connector. Modules 19 and 19a are located each one in the emitter and receptor units, and they are connected by conventional coaxial cable 28, to obtain the interconnected media to control the frequency and intensity of the magnetic fields.

Conventional media may be used providing they are the equivalent of the electrical circuit illustrated in figure 9 and 10 and that they comprise a permanent magnet for the starting magnetic field, amplifying and oscillating transistor media, which using the spike or pulse, generate an amplified magnetic field which is guided to a transverse winding for the formation of a field of increased lines of force able to be used to incide in the liquid in circulation. These components will always depend on the collapse of the lines of force caused by the liquid in circulation and in order to obtain by this collapse a spike or pulse which determines the generation of a new increased field by its amplification and the resulting oscillation produced by positive feedback.

In the electric circuit in figures 9 and 10, the solid state media are designated with number 23, 23' and 23".

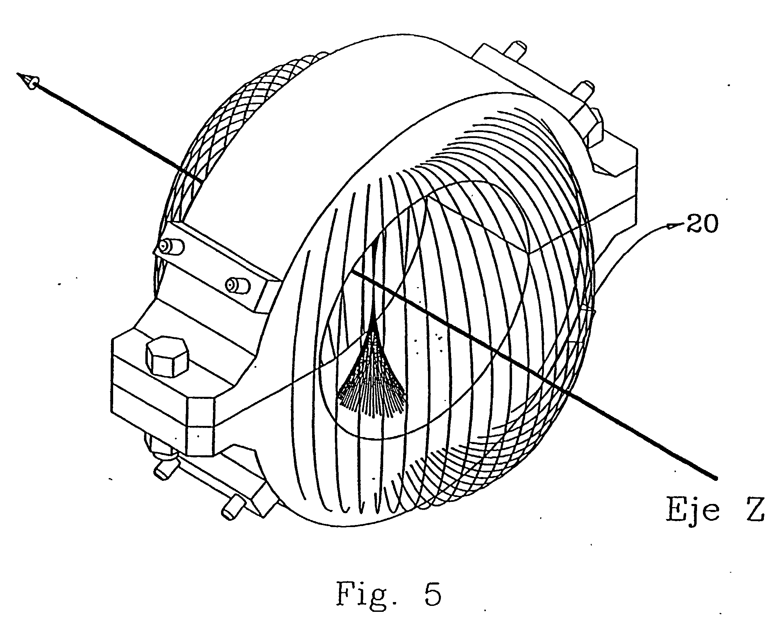

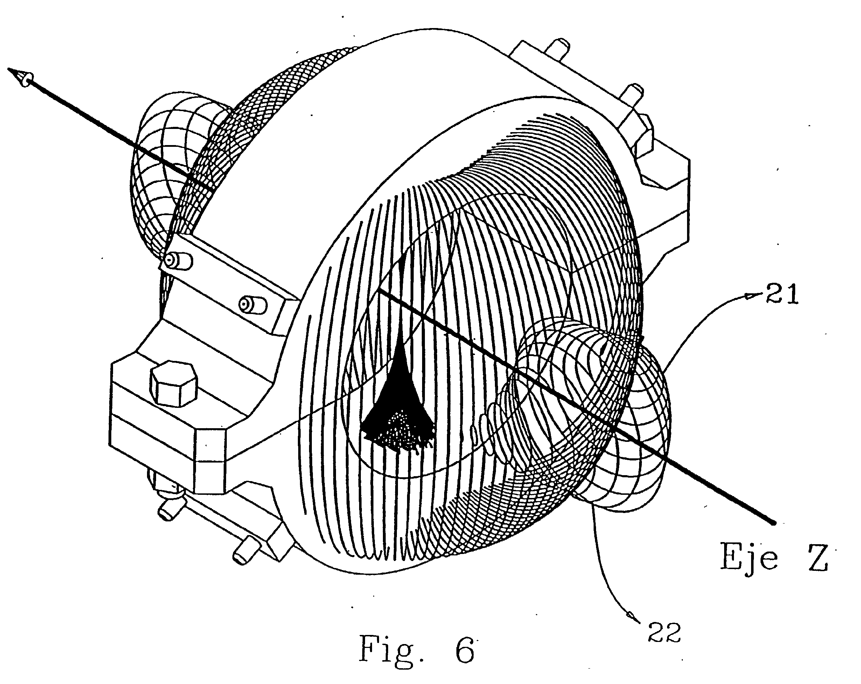

It must be understood that these solid state components for the amplification, the generation of an increased magnetic field and the deflection of the lines of force illustrated in figures 5 and 6, may be integrated into a module which is specifically made for this purpose and which is schematically illustrated in figure 4. In all cases a transverse winding 33 of figure 4 is used, said winding having the double purpose of capturing the spike and generating by the use of the amplified current, the new increased magnetic field.

The operation of the device, subject matter of this invention, is started as described by the operation by a starting magnetic field provided by a permanent magnet, which is made to collapse when the liquid circulates, causing the generation of an impulse or spike, which is applied to the equivalent electrical circuit by winding 29 operating in a section of transistor 23". This same transistor, in its function as an amplifier generates in winding 30 an increased magnetic field, which differential frequency is sensed by tank 31 and sent to capture coil 32 in order to feedback the signal to the variable frequency oscillator which is connected at terminal T1 to transistor 23.

Modules 17, 18 and 19 in each unit provide a permanent magnetic field of limited intensity, by design, which lines offorce 20, are arrayed transversely to the passage of fluid within the tubular medium 10, as illustrated in figure 5.

This field is not sufficient to influence the fluid and to obtain the desired effects on it, this being the reason for the invention to provide the interaction of the passage of fluid and this initial magnetic field.

As illustrated schematically in figure 5, lines of force 20 of the initial magnetic field, are cut by the passage of the fluid displaced within the tubular medium, Z axis, and which fluid volume coincides with the center of units 1 and 2. This interruption of the magnetic lines results in the collapse of the permanent magnetic fields, and as it is known, any collapse of a magnetic field results in the induction of a current in the coils adjoining the field, which receive the resulting energy of the collapse of this magnetic field.

In the invention, this induction current affects all coils in the unit, as a spike that is a current surge, that in turn is going to be amplified and controlled by the solid state media. The relative position of the primary lines of force, results in their deflection, that as described in figure 6, generates a secondary magnetic field which lines are arrayed as a revolution ellipsoid 21, extending said field and providing other lines of force 22.

These newly created lines of force will also be cut by the displacement of the fluid's volume, which in turn will result in a greater increase of energy affecting induction media in the units which provides an inciding magnetic energy reaching the fluid, stronger than that of the initial fields, and which is sufficient to affect the fluid's characteristics as needed.

This feedback phenomenon resulting in a considerable increase of magnetic application energy, must be controlled and for this purpose there is a second unit 2 affixed to the tubular container at a certain distance from the first unit, in such a way that an out-of-phased effect in the oscillation frequency is obtained, in order to have in the device feedback control media, in relation to the oscillation frequency of the fields. The amplitude of these fields is controlled in the invention by the phenomenon of parasitic frequency or index of oscillation of the stationary waves.

This phenomena of the increase of the magnetic fields in the units results in the formation of lines of force of the magnetic fields in both units and the resulting new lines offorce will be cut by the passage of fluid, with the collapse of the magnetic fields and the generation of the resulting spike, which will affect all windings, but in particular will be sensed by module 19a. The sensor modules of the second unit in their sensory activity, determine the effects of the magnetic fields, on the fluid content, as well as the effect of the oscillation frequency, and in turn will feedback this information to the first unit, providing the necessary frequency adjustment on the frequency sweep oscillation media.

It is to be understood that the invention may comprise any number of modules in the units of emission and reception, as well as any number of these units interconnected, according to the the needs of the specific application of the invention.

In this manner, and by the media provided in the invention, in its described operation, self-excited magnetic fields are obtained, that do not require the initial energy and that have reached a useful intensity for the purpose of the invention.

The already increased electromagnetic energy, affects the volume of the fluid in motion within the tubular medium 10, and it has been found that the physical, chemical or biological characteristics in this fluid, have been modified by its passage through the magnetic fields of units 1 and 2.

With these characteristics of the invention, the content of salts, algae, or bacteria found in the fluid, are affected in their kinetics by the magnetic fields, which allows the particles to decelerate, with the sudden occurrence of dissociation, inhibition or implosion of these contents, obtaining the effects sought in the treatment of fluid.

The invention that has been described for one of its modalities, finds a practical application in the treatment of water used for agricultural, industrial and domestic use, since it is possible with the device, subject matter of the invention, to have magnetic fields of specific and sufficient energy for the dissociation, better absorption and in some cases, elimination of certain components in liquids, in order to obtain water, that, as a vehicle, and for its use in agriculture, will allow a better nutrition of vegetables and therefore a more complete photosynthesis. At home, the reduction of salts, provides lighter water with better taste.

Likewise, this specificity of the magnetic fields, due to their oscillation frequency, will also result in the application of the invention to the treatment of water for the inhibition of bacteria, fungi and other microorganisms for the disinfection of the liquid.

The known application of water treatment in order to eliminate scaling, with the more intense magnetic fields, economically obtainable by the invention, results in a more efficient descaling operation.

Having described my invention, I consider as new and claim as my property, what it is contained in the following:

## Claims

1. A generator of magnetic fields increased by the passage of fluids, characterized by permanent magnetic media generating an initial permanent magnetic field, arraying lines of force transversal to the passage of a fluid within a tubular medium, which fluid in motion cuts the lines of force of this magnetic field, so that in its resulting collapse, it generates a spike or pulse susceptible of being used for the induction of a new increased magnetic field.

2. In a generator of magnetic fields increased by the passage of fluids, as specified under the preceding clause, media to obtain a spike or pulse resulting from the collapse by the passage of fluid of a field of the lines of force in the magnetic field, consisting these media in the functional combination of a permanent magnet and a winding arrayed transversely to said permanent magnet which in the collapse of the magnetic field results in the induction in the transverse winding of a spike or pulse generated by this collapse and said spike producing a current to be amplified in order to obtain the increased magnetic fields.

3. In a generator of magnetic fields increased by the passage of fluids, as specified under the preceding clauses, feedback media for the pulse energy or spike caused by the collapse of the initial or subsequent magnetic fields, characterized by one or more induction media, that receive the spike or pulse produced by the collapse of a magnetic field, in such a way that its energy is amplified and fedback for the generation in the same transverse winding of a new and increased magnetic field.

4. In a generator of magnetic fields increased by the passage of fluids, sensor and reception media of a spike or pulse, susceptible of feedback to the sweep oscillator establishing and locking its optimum frequency.

5. In a generator of magnetic fields increased by the passage of fluids, sensor and reception media of a spike or pulse, susceptible of feedback of this energy produced by the induction of the spike or pulse in such a manner that this feedback results in the self-excitation of the media to generate the magnetic fields and the stabilization of the operation of the sweep oscillator providing the interaction of the media that generates the starting magnetic field and of the subsequent magnetic fields with the passage of fluid which cuts into the lines of force of said starting and subsequent magnetic fields.

6. In a generator of magnetic fields increased by the passage of fluids, an additional unit located in the passage of said fluid in the same conditions as the first unit, this additional unit providing the induction media to sense the collapse of the magnetic field cutting into the lines of force in such a way that the resulting signal is utilized by both units to control the feedback operation and the stabilization of the frequency for optimal operation.

7. A generator of magnetic fields increased by the passage of fluids, further characterized by the interaction of the initial and subsequent magnetic fields with the passage of fluid that cuts its lines of force, said magnetic fields deflected by the generating components and said deflection establishing lines of force oriented for their greatest incidence in the passing fluid to take the form of a revolution ellipsoid.

8. A generator of magnetic fields increased by the passage of fluids characterized by providing solid state media for the amplification of the current induced in a transverse winding, by a pulse or spike formed by the collapse of the starting or subsequent magnetic fields by the passage of a fluid, said current amplified in one or more steps and carried to the transverse winding of an inductor for the generation of a new increased magnetic field.

9. A generator of magnetic fields increased by the passage of fluids, characterized by the functional combination of a permanent magnetic media to generate an initial magnetic field; induction media to generate the subsequent magnetic fields, which lines of force are transversal to the passage of fluid within a tubular medium, said fluid in motion cutting and collapsing the lines of force of this magnetic field; a sweep frequency oscillator acting on the magnetic fields generation components; induction media which receive the spikes or pulses resulting from the collapse of the magnetic fields, producing a current in said induction media; solid state media for the amplification of the induced current which is fedback to the induction media for the generation of increased magnetic fields; said induction media, also sensing the paramagnetic or diamagnetic characteristics of the fluid contents, feeding back to the sweep oscillator these characteristics as a frequency signal.
